# Europäisches Patentamt

# European Patent Office

# Office européen des brevets

(19)

(11) Veröffentlichungsnummer: **0 095 074**
**B1**

(12)

# EUROPÄISCHE PATENTSCHRIFT

(45) Veröffentlichungstag der Patentschrift:
16.12.87

(51) Int. Cl.⁴: **G 01 N 21/64**

(21) Anmeldenummer: **83104431.8**

(22) Anmeldetag: **05.05.83**

(54) Anordnung zur optischen Messung von Konzentrationen.

(30) Priorität: **24.05.82 DE 3219397**

(43) Veröffentlichungstag der Anmeldung:
**30.11.83 Patentblatt 83/48**

(45) Bekanntmachung des Hinweises auf die Patenterteilung:
**16.12.87 Patentblatt 87/51**

(84) Benannte Vertragsstaaten:
**AT BE CH FR GB IT LI LU NL SE**

(56) Entgegenhaltungen:
**DE-A-2 720 370**
**DE-A-2 856 252**
**DE-B-2 632 710**

**ZEITSCHRIFT FÜR NATURFORSCHUNG, Band 30c, 1975 D.W. LÜBBERS et al. "Die pCO2-/pO2-Optode: Eine neue pCO2- bzw. pO2-Meßsonde zur Messung des pCO2 oder pO2 von Gasen und Flüssigkeiten", Seiten 532-533**

(73) Patentinhaber: **Max- Planck- Gesellschaft zur Förderung der Wissenschaften e.V., Bunsenstrasse 10, D-3400 Göttingen (DE)**

(72) Erfinder: **Opitz, Norbert, Dr., Villigsterstrasse 6, D-5840 Schwerte (DE)**
Erfinder: **Lübbers, Dietrich Werner, Prof. Dr., Rheinlanddamm 201a, Dortmund (DE)**

(74) Vertreter: **Hofmann, Hans Walter, Dr., Hauberisserstrasse 36, D-6200 Wiesbaden (DE)**

# 0 095 074

**Beschreibung**

Die Erfindung bezieht sich auf eine Anordnung zur optischen Messung von Teilchenkonzentrationen. Um Konzentrationen einer bestimmten Teilchenart auf oder in Körpern berührungslos zu messen wird der den Indikatorstoff enthaltende, mittels eines Stoffes abgegrenzte Raum, kurz als OPTODE bezeichnet, auf der Oberfläche, oder, wo die Transparenz des Messobjektes dies zulässt, im Messobjekt angeordnet. Die zu messende Teilchenart diffundiert in den Indikatorraum ein, der Indikatorraum wird durch das vom Monochromator ausgehende Prüflicht beleuchtet und die Änderung des zurückkommenden Messlichtes, die durch die zu messende Stoffkonzentration verursacht ist, mittels der Lichtmesseinrichtung gemessen. Die auf die jeweilige Teichenkonzentrationen geeichten Anzeigevorrichtungen zeigen unmittelbar die Grösse oder die Grössenänderung der Teilchenkonzentration an.

Bei solchen Anordnungen ist bereits erkannt worden (DE-PS 2.508.637), dass der optischen Entkopplung von Messtrahlung und Membran eine wesentliche Bedeutung zukommt, weil sonst Rückwirkungen vom Messobjekt auf den Indikatorraum in das Messergebnis eingehen. Dazu wurde vorgeschlagen, die Innenseite des Indikatorraumes auf der der Lichtquelle gegenüberliegenden Seite zu verspiegeln -wodurch ein mehrfacher Durchgang des Messlichtes durch den Indikatorraum erfolgt und die Grenzfläche "Membran" optisch neutralisiert ist-, oder die Membran zu schwärzen, -sodass das vom Indikator geänderte Licht nur direkt aus dem Indikatorraum und nicht nach Reflexion an der Membran zum Lichtempfänger gelangt. Auch dadurch verhält sich der Indikatorraum optisch neutral.

Die vorgeschlagenen Anordnungen haben verschiedene Nachteile. So sind gut spiegelnde Flächen gleichzeitig diffusionsdicht, sodass die Messung beispielsweise von Stoffkonzentrationen nur bei Teilverspiegelung erfolgen kann. Dadurch ist aber die Rückwirkungsfreiheit vermindert. Geschwärzte Membranen andererseits verringern die Messtrahlung. Ausserdem verspröden die Membranen leicht durch die eingebrachten Pigmente und zusätzlich eingebrachte Stoffe verfälschen beispielsweise bei Konzentrationsmessungen das Messergebnis aufgrund der eigenen Aufnahmefähigkeit für den zu messenden Stoff.

Die optische Entkopplung von Optoden zu verbessern hat sich die Erfindung deshalb zur Aufgabe gemacht. Diese Aufgabe wird durch eine Anordnung nach dem Anspruch 1 gelöst.

Der Vorteil einer erfindungsgemäßen Anordnung besteht darin, dass bei homogener Verteilung der Indikatorstoffe die Fluoreszenzstrahlung nur mehr gering von dem Ort abhängig ist, an dem sich die Indikatormoleküle befinden. Dadurch wiederum ist der optische Einfluss durch die Permeationsparameter der Grenzschicht auf das Messignal nahezu neutralisiert, sodass auch nur geringe Signalverfälschungen durch die Grenzschicht auftreten.

Ein weiterer besonderer Vorteil gegenüber dem Stand der Technik liegt darin, dass beispielsweise keine absorbierenden Stoffe verwendet werden, sondern dass die Neutralisierung der Grenzschicht allein durch die Art der Anordnung der wirksamen Stoffe in der Grenzschicht und die Stoffwahl erfolgt, die für sich selbst verlustfrei ist.

Ein besonders genauer Abgleich lässt sich durchführen, wenn

$$\frac{A_L}{B_L} = \frac{1}{6}\left[\left(\frac{Bd}{Ad}\right)^{\frac{1}{2}} + 5\left(\frac{Bd}{Ad}\right)^{\frac{1}{2}}\right]$$

Al = Löslichkeitskoeff. Stoff A
Ad = Diffusionskoeff. Stoff A
Bl = Löslichkeitskoeff. Stoff B
Bd = Diffusionskoeff. Stoff B

In einer einfachen ersten Anwendung weist der den Indiktorraum begrenzende Stoff Polyäthylen eine solche Dichte auf, dass sich die Quadrate der Löslichkeitskoeffizienten etwa umgekehrt verhalten, wie die Diffusionskoeffizienten.

Der Vorteil dieser Lösung besteht darin, dass durch die Einstellung der Dichte des Polyäthylens bei der Herstellung für beide Koeffizienten gleichzeitig der erforderliche Wert eingestellt werden kann.

Nachteilig ist dabei bisher, dass Löslichkeitskoeffizient und Diffusionskoeffizient nur in geringem Masse voneinander unabhängig einstellbar sind.

Um auch Anpassungen an Messobjekte mit stark unterschiedlichen Koeffizienten vornehmen zu können ist daher der den Indikatorraum begrenzende Stoff als Stoffmischung ausgebildet.

Dadurch entsteht ein Stoff mit mittleren Löslichkeits-und Diffusionskoeffizienten, wobei jeder der Koeffizienten je nach Wunsch durch Mischung der zugegebenen Stoffmengen einstellbar ist.

Der zuzumischende Stoff hat vorteilhaft die Form von Granulat, das einen Korndurchmesser von etwa der Grössenordnung 1 Mikrometer hat.

Weiterhin können mit Vorteil auch Nanokapseln, die aus der Membran eines ersten Stoffes bestehen und einen zweiten Stoff umschliessen, in einer membranartigen Matrix eines dritten Stoffes angeordnet sein.

Auch dadurch entsteht ein System aus mindestens drei Stoffen mit dem die Löslichkeits-und Diffusionskoeffizienten in einem breiten Bereich unabhängig voneinander veränderbar sind.

2

Falls nicht besonders dünne Indikatorräume von wenigen Mikrometer Dicke verwendet werden sollen, sind auch sandwichartige Kombinationen mehrerer Folien verwendbar, deren mittlere Koeffizienten auf das Messobjekt angepasst sind.

In der Zeichnung sind weitere Einzelheiten der Erfindung schematisch dargestellt. Es zeigen:

Fig.1 Eine Grenzschicht zur Erläuterung

Fig 2 Eine Grenzschicht als Mehrstoffsystem

Fig.3 Eine Grenzschicht mit molekularer Indikatorschicht

Fig.4 Eine sandwichartige Schicht.

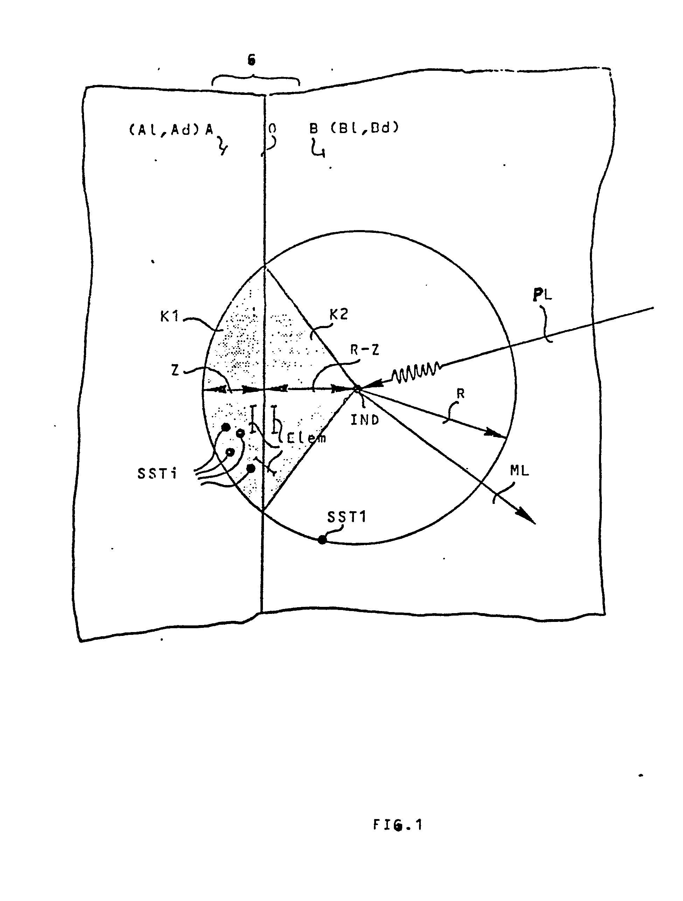

In Fig.1 liegt eine Grenzschicht G mit einer Oberfläche O zwischen einem Messobjekt A und einem Indikatorraum B. Im Abstand R-z von der Oberfläche O befinde sich ein Indikatormolekül IND im durch eingestrahltes Prüflicht PL verursachten angeregten Zustand. Der Anregungszustand wird statistisch nach einer Zeit To durch Abgabe eines Strahlungsquantums von Fluoreszenzlicht ML in den unangeregten Grundzustand übergehen.

Trifft jedoch innerhalb der Zeit To ein Sauerstoffmolekül SST1 auf dem Diffusionsweg auf das angeregte Indikatormolekül, dann wird der angeregte Zustand durch das Zusammentreffen beendet, das statistisch zu erwartende Fluorszenzquantum ML fällt aus. Es hat sonach ein "quenching", eine Löschung, der Fluoreszenz stattgefunden.

Es kann also jedem Indikatormolekül eine räumliche Zone, ein Wirkraum, zugeordnet werden, für dessen Radius, dem Wirkradius, gilt:

$$R = \sqrt{6 B d To}$$

der also von der mittleren Lebensdauer To des angeregten Zustandes und dem Diffusionskoeffizienten Bd abhängt.

Liegt nun, wie im gezeichneten Beispiel, in der Kalotte K1 eine geringere Konzentration an diffundierenden Partikeln vor als im Kegel K2 oder ist der Diffusionskoeffizient in K1 kleiner als in K2, dann wird der Löscheffekt verringert.

Dieser Unterschied in der Wirkung der zu messenden Teilchen SSTi auf die Indikatormoleküle einmal aus dem Inneren des Indikatorraumes und zum anderen aus der Grenzschicht soll nunmehr ausgeglichen werden.

Er ist dann weitgehend eliminiert, wenn, wie die Theorie zeigt, das Verhältnis

$$\frac{A_L}{B_L} = \frac{1}{6} \left[ \left( \frac{Bd}{Ad} \right)^{\frac{3}{2}} + 5 \left( \frac{Bd}{Ad} \right)^{\frac{1}{2}} \right]$$

besteht, weil bei solchen Paarungen der Löslichkeitskoeffizienten Al,Bl und der Diffusionskoeffizienten Ad,Bd der Strom von Teilchen durch jede gedachte Elementarfläche ELEM im Einzugsbereich jedes Indikatormoleküls nahezu gleich ist, auch wenn die Elementarfläche ELEM in der Grenzschicht liegt.

Die Einstellung dieses Verhältnisses kann über die Herstellungsbedingungen für den Indikatorraum erfolgen. Beispielsweise lässt sich durch Zusatz von Weichmachern, durch die Verstreckungsbedingungen für die Kunststoffe, durch die Polymermischung oder, wie etwa bei Polyäthylen, durch Einstellung des Molekulargewichtes der Löslichkeitskoeffizient, die Permeabilität für die zu messenden Teilchen und der Diffusionskoeffizient verändern.

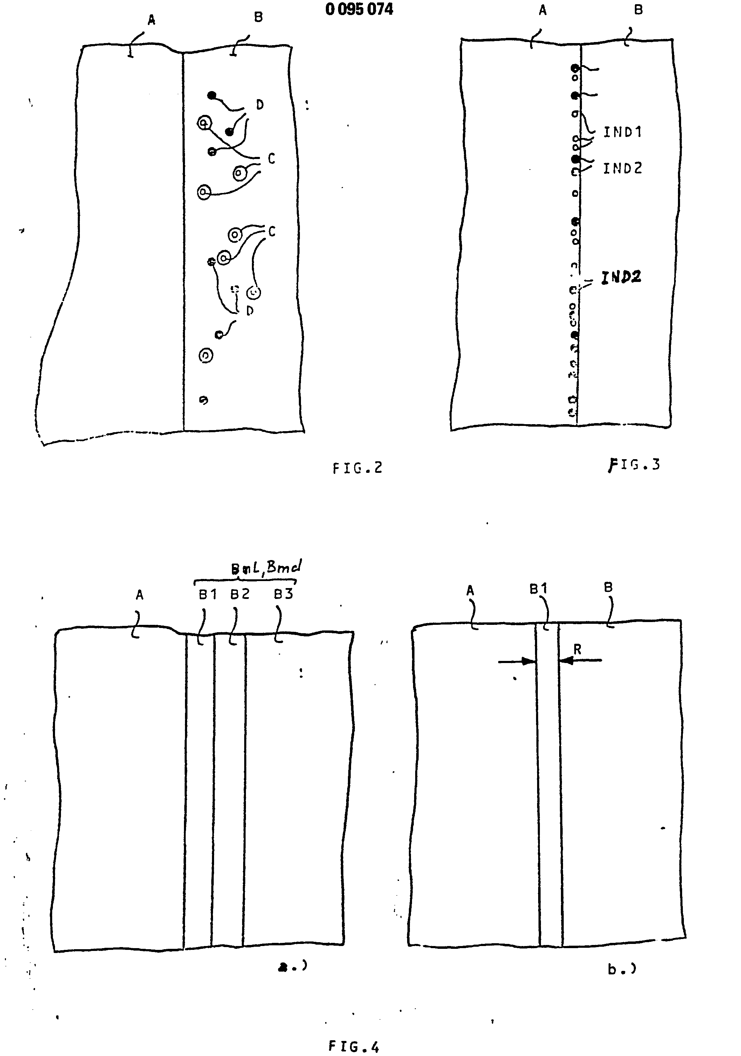

Fig.2 zeigt eine Anordnung, mit der eine Anpassung der Diffusionskoeffizienten und der Löslichkeitskoeffizienten über weite Bereiche ermöglicht ist.

Dazu ist Granulat eines Stoffes C (Löslichkeitskoeffizient Cl, Diffusionskoeffizient Cd) und Granulat eines Stoffes D (Dl,Dd) in einem Indikatorraum B angeordnet, der aus der Folie eines Stoffes B (Bl,Bd) besteht. Das Messobjekt A bestehe aus einem Stoff A (Al,Ad), gemessen werden soll die Konzentration einer bestimmten diffundierenden Partikelart. Im vorliegenden Fall sei dies die Sauerstoffkonzentration in A.

Im Gleichgewichtszustand, der vom System eingenommen und statisch gehalten wird, gilt die Beziehung

$$\frac{Ka}{Kb} = \frac{Al}{Bl}$$

Ka = Konzentration $O_2$ in A

Kb = Konzentration $O_2$ in B

Soll der Grenzschichteinfluss gemäss der Erfindung ausgeglichen werden, muss zusätzlich gelten:

$$\left( \frac{A_L}{B_L} \right)^2 \approx \frac{Bd}{Ad}$$

Zunächst wird je für sich bei der Folienherstellung durch Zufügen eines Volumanteils von C ein mittlerer Löslichkeitskoeffizient aus Granulat C und Folie B eingestellt, der dem gewünschten Löslichkeitskoeffizienten Blo entspricht, sowie der gleiche Löslichkeitskoeffizient Bl2 = Blo durch entsprechendes Zufügen von Granulat D zur Folie B. Dafür gilt:

$$\frac{K_1C_2 + K_2Bl}{K_1 + K_2} = Bl_1 = Blo$$

K1/K3 = Mengenfaktoren für C
K2/K4 = Mengenfaktoren für B

$$\frac{K_3D_2 + K_4Bl}{K_3 + K_4} = Bl_2 = Blo$$

Die dabei entstehenden Diffusionskoeffizienten Bd1,Bd2 sollen die Eigenschaft
mit: Bdo gewünschter Diffusionskoeffizient

$$Bd/1 < Bd_0 < Bd_2$$

haben, was ohne Schwierigkeit erreichbar ist.
Würden die entstandenen Folien zusammengesetzt und derart gewichtet dass

$$\frac{K_5 \cdot Bd_1 + K_6 \cdot Bd_2}{K_5 + K_6} = Bdo$$

dann blieben dabei die Löslichkeitskoeffizienten Bl1 = Bl2 = Blo erhalten und es würde der gewünschte Diffusionskoeffizient Bdo entstehen.

Praktisch wird der den Indikatorraum begrenzende Stoff jedoch dadurch aufgebaut, dass die beiden Granulate C und D in entsprechender relativer gegenseitiger Gewichtung in die gleiche Folie C eingetragen werden, wobei die Mengenrelation zur Folie C entsprechend jeweils eingehalten werden muss. Vorteilhaft liegt die Korngrösse des Granulats etwa in der Grössenordnung des Wirkradius (4). Eine für die Herstellung und die Wirkung gleichermassen günstige Grössenordnung ist ein Durchmesser von etwa ein Mikrometer.

Eine besonders weitgehende Elimination der Grenzschicht erfolgt in einer Weiterentwicklung der Erfindung: sind die Indikatormoleküle nach Fig.3 in einer molekularen Oberflächenschicht angeordnet und wird die Bedingung

$$\frac{A_L}{B_L} = \frac{1}{4}\left[\left(\frac{Bd}{Ad}\right)^{\!\frac{1}{2}} + 3\left(\frac{Bd}{Ad}\right)^{\!\frac{1}{2}}\right]$$

eingehalten, dann ist praktisch kein Einfluss der Grenzschicht mehr erkennbar.

Für den Fall, dass die Indikatorräume nicht besonders dünn sein müssen, können sandwichartige, hintereinander liegende Schichten verwendet werden, deren mittlere Parameter
Bml, Bmd
gemäss Fig.4 die entsprechenden Verhältnisse erfüllen.

## Patentansprüche

1. Anordnung zur optischen Messung von Teilchenkonzentrationen, bestehend aus einer Lichtmeßeinrichtung mit mindestens einer Strahlungsquelle, einem Monochromator, einem Lichtempfänger und einer Anzeigevorrichtung und mindestens einem durch die Lichtmeßeinrichtung vermeßbaren Raum (B), der mittels einer durch die zu messenden Teilchen (SSTi) permeierbaren Stoffanordnung abgegrenzt ist, wobei der Raum (B) einen auf die zu messende Teilchenkonzentration mittels Fluoreszenzänderung reagierenden Indikatorstoff (IND) enthält, dadurch gekennzeichnet, daß die Stoffanordnung oder die Stoffanordnung und der Indikatorstoff (IND) so gewählt ist oder sind, daß sich für die zu messenden Teilchen (SSTi) die Quadrate der Löslichkeitskoeffizienten Al, Bl eines Meßobjekts (A) und der den abgegrenzten Raum (B) bildenden Stoffe etwa umgekehrt verhalten wie deren Diffusionskoeffizienten Ad, Bd.

2. Anordnung nach Anspruch 1, dadurch gekennzeichnet, dass in der Stoffanordnung mindestens ein weiterer Stoff (C,D,) in Partikelform angeordnet ist.

3. Anordnung nach Anspruch 2, dadurch gekennzeichnet, dass die Partikel (C,D) die Form eines Granulats aufweisen.

4. Anordnung nach Anspruch 2, dadurch gekennzeichnet, dass die Partikel (C) die Form von Nanokapseln aufweisen.

5. Anordnung nach einem der Ansprüche 2 bis 4, dadurch gekennzeichnet, dass die Partikel (C,D) einen Durchmesser der Grössenordnung 1 Mikrometer aufweisen.

6. Anordnung nach Anspruch 1, dadurch gekennzeichnet, dass die Stoffanordnung eine Mehrschichtanordnung (B1,B2,B3) ist, die einen mittleren Löslichkeitskoeffizienten (Bm) aufweist, derart, dass sich für die zu messenden Teilchen (SSTi) die Quadrate der Löslichkeitskoeffizienten etwa umgekehrt verhalten wie die Diffusionskoeffizienten.

7. Anordnung nach Anspruch 1, dadurch gekennzeichnet dass die Stoffanordnung aus Polyäthylen besteht, dessen Dichte derart eingestellt ist, dass sich für die zu messenden Teilchen (SSTi) die Quadrate der Löslichkeitskoeffizienten etwa umkehrt verhalten wie die Diffusionskoeffizienten.

8. Anordnung nach einem der Ansprüche 1 bis 6, dadurch gekennzeichnet, dass bei homogener Verteilung der Indikatormoleküle die Löslichkeitskoeffizienten und die Diffusionskoeffizienten der Beziehung

$$\frac{A_L}{B_L} = \frac{1}{6}\left[\left(\frac{Bd}{Ad}\right)^{\frac{1}{2}} + 5\left(\frac{Bd}{Ad}\right)^{\frac{1}{2}}\right]$$

genügen.

9. Anordnung nach Anspruch 1, dadurch gekennzeichnet, dass der Indikatorstoff aus einer molekularen Oberflächenschicht (IND1,IND2) besteht und die Löslichkeitskoeffizienten und die Diffusionskoeffizienten der Beziehung

$$\frac{A_L}{B_L} = \frac{1}{4}\left[\left(\frac{Bd}{Ad}\right)^{\frac{1}{2}} + 3\left(\frac{Bd}{Ad}\right)^{\frac{1}{2}}\right]$$

genügen.

10. Anordnung nach Anspruch 1, dadurch gekennzeichnet, dass der Indikatorstoff inhomogen im Raum (B) angeordnet ist und die Löslichkeitskoeffizienten und die Diffusionskoeffizienten der Beziehung

$$\frac{1}{4}\left[\left(\frac{Bd}{Ad}\right)^{\frac{1}{2}} + 3\left(\frac{Bd}{Ad}\right)^{\frac{1}{2}}\right] < \frac{A_L}{B_L} < \left(\frac{Bd}{Ad}\right)^{\frac{1}{2}}\right]$$

genügen.

11. Anordnung nach Anspruch 1, dadurch gekennzeichnet, dass zwischen Raum (B) und Messobjekt (A) eine indikatorfreie Schicht (B1) der Dicke

$$R = \sqrt{6Bd \cdot To}$$

eingefügt ist, wobei To die mittlere Lebensdauer eines angeregten Zustandes eines Indikatormoleküls ist.

## Claims

1. Arrangenement for the optical measurement of the concentration of particles, comprising a light measuring means with at least one light source, a monochromator, a light sensor and indicator means and at least one space (B) which is enclosed by a membrane permeable by the particles to be measured (SSTi), the space (B) containing a substance and an indicator substance (IND) reacting to the concentration of the particles to be measured by a change in fluorescence, characterized by the choice of the substance such that the square of the solubility coefficients A1,B1 of the measuring object (A) and the substances enclosed in the membrane in space (B) are about inversely proportional to their coefficients of diffusion Ad,Bd.

2. Arrangement according to claim 1, characterized by the fact that the substance is containing at least one more substance (C,D,..) in form of particles.

3. Arrangement according to claim 2, characterized by the fact that the particles (C,D) have the form of granules.

4. Arrangement according to claim 2, characterized by the fact that the particles (C) have the form of nanocapsules.

5. Arrangement according to one of the claims 2 to 4, characterized by the fact that the particles (C,D) have a diameter of about 1 micron.

6. Arrangement according to claim 1, characterized by the fact that the substances are arranged as a multilayer (B1,B2,B3) having a mean coefficient of solubility (Bm) such that for the particles (SSTi) to be measured the square of the coefficient of solubility is about inversely proportional to the coefficients of diffusion.

7. Arrangement according to claim 1, characterized by the fact, that the substance is polyethylene the density of which is such that for the particles (SSTi) to be measured the square of the coefficients of solubility is about inversely proportional to the coefficients of diffusion.

8. Arrangement according to one of the claims 1 to 6, characterized by the fact that for homogeniously distributed indicator molecules the coefficients of solubility and the coefficients of diffusion hold

$$\frac{A_i}{B_i} = \frac{1}{6}\left[\left(\frac{Bd}{Ad}\right)^{\!\frac{1}{2}} + 5\left(\frac{Bd}{Ad}\right)^{\!\frac{1}{2}}\right]$$

9. Arrangement according to claim 1, characterized by the fact, that the indicator substance is forming a molecular surface layer (IND1,IND2) and that the coefficients of solubility and the coefficients of diffusion hold

$$\frac{A_L}{B_i} = \frac{1}{4}\left[\left(\frac{Bd}{Ad}\right)^{\!\frac{1}{2}} + 3\left(\frac{Bd}{Ad}\right)^{\!\frac{1}{2}}\right]$$

10. Arrangement according to claim 1, characterized by the fact that the indicator substance is inhomogeniously distributed and that the coefficients of solubility and the coefficients of diffusion hold

$$\frac{1}{4}\left[\left(\frac{Bd}{Ad}\right)^{\!\frac{1}{2}} + 3\left(\frac{Bd}{Ad}\right)^{\!\frac{1}{2}}\right] < \frac{A_i}{B_i} < \left(\frac{Bd}{Ad}\right)^{\!\frac{1}{2}}$$

11. Arrangement according to claim 1, characterized by the fact, that a layer without indicator substance having a thickness of

$$R = \sqrt{6Bd \cdot To}$$

is placed between space (B) and object of measurement (A), TO describing the mean life time of an excited state of an indicator molecule.

## Revendications

1. Arrangement pour la mésure optique de la concentration des particles, consistant en une source de lumière, un senseur pour la lumière, une monochromateur et un éspace (B) enfermè avec une membrane permeable pour les particles à mésurer et contenant une substance (IND) changeant le fluorescence par le concentration des particles à mésurer, caractérisé par la choix d'une substance pour l'espace (B) de cette façon que le carré des coefficients de solubilité du object à mésurer et cette de la substance de l'éspace (B) A1,B1 est proportionnel a l'inverse des leurs coefficients de diffusion Ad,Bd.

2. Arrangement selon la revendication 1, caractérisé par le fait que la substance est contenant du moins une substance additionelle (C,D, ) en forme des particles.

3. Arrangement selon la revendication 2, caractérisé par le fait que les particles sont de forme granulaires.

4. Arrangement selon la revendication 2, caractérisé par le fait que les particles sont de forme des nanocapsules.

5. Arrangement selon une des revendications 2 a 4, caracterisé par le fait que les particles ont un diamètre de 1 micron.

6. Arrangement selon la revendication 1, caractérisé par le fait, que les substances sont arrangées en forme des couches laminées (B1,B2,B3) avec un coefficient moyen (Bm) de cette façon que pour les particles à mesurer (SSTi) le carré des coefficients de solubilité du object à mésurer et cette des couches laminées est proportionnel a l'inverse des leurs coefficients de diffusion.

7. Arrangement selon la revendication 1, caractérisé par le fait, que la substance est polyethylene avec une densitée de cette façon que pour les particles à mésurer (SSTi) le carre des coefficients de solubilité du object à mésurer et cette des couches laminées est proportionnel a l'inverse des leurs coefficients de diffusion.

8. Arrangement selon une des revendications 1 a 6, caractérisé par le fait, que pour molecules indicatrices distribuées homogènement le relation entre les coefficients de solubilité et les coefficients de diffusion est

$$\frac{A_1}{B_1} = \frac{1}{6}\left[\left(\frac{Bd}{Ad}\right)^{\frac{1}{2}} + 5\left(\frac{Bd}{Ad}\right)^{\frac{1}{2}}\right]$$

9. Arrangement selon la revendication 1, caractérisé par le fait, que la substance indicatrice est en forme de couche superficiélle et le relation entre les coefficients de solubilité et les coefficients de diffusion est

$$\frac{A_L}{B_1} = \frac{1}{4}\left[\left(\frac{Bd}{Ad}\right)^{\frac{1}{2}} + 3\left(\frac{Bd}{Ad}\right)^{\frac{1}{2}}\right]$$

10. Arrangement selon la revendication 1, caractérisé par le fait, que pour molecules indicatrices distribuées inhomogènement le relation entre les coefficients de solubilité et les coefficients de diffusion est

$$\frac{1}{4}\left[\left(\frac{Bd}{Ad}\right)^{\frac{1}{2}} + 3\left(\frac{Bd}{Ad}\right)^{\frac{1}{2}}\right] < \frac{A_1}{B_1} < \left(\frac{Bd}{Ad}\right)^{\frac{1}{2}}$$

11. Arrangement selon la revendication 1, caractérisé par le fait qu'une couche sans matèrial indicatrice est posée entre l'object à mesurer et l'éspace (B) et est d'une epaisseur

$R = \sqrt{6Bd \cdot To}$

avec To denominant la durée de la vie d'une molecule indicatrice en état excité.

FIG.1

FIG.2

FIG.3

a.)

b.)

FIG.4

3